# EUROPEAN PATENT SPECIFICATION

(11) **EP 3 034 814 B1**
(45) Date of publication and mention of the grant of the patent: **27.09.2017**
(21) Application number: 15200081.6
(22) Date of filing: 15.12.2015
(51) Int. Cl.: F01D 21/04, F01D 25/24, F02K 3/06, F01D 25/00

(54) **LINERS FOR TURBOMACHINERY CASES**
VERKLEIDUNG FÜR TURBOMASCHINENGEHÄUSE
DOUBLURES POUR CARTERS DE TURBOMACHINES

(30) Priority: 15.12.2014 US 201462091896 P
(43) Date of publication of application: 22.06.2016
(73) Proprietor: United Technologies Corporation, Farmington, CT 06032 (US)
(72) Inventor: CLARKSON, Steven, Cheshire, CT Connecticut 06410 (US); ROBERTSON, Thomas J. JR., Glastonbury, CT Connecticut 06033 (US)
(74) Representative: Hall, Matthew Benjamin

(56) References cited:
- EP-A2- 2 365 186
- US-A- 5 163 809
- US-A1- 2014 072 421

## Description

### BACKGROUND

### 1. Field

The present disclosure relates to turbomachinery, and more particularly to cases housing turbomachinery.

### 2. Description of Related Art

Gas turbine engines commonly include a rotor rotatably supported within an engine case. Rotation of the rotor compresses air ingested in a compressor section of the engine. The compressor section is typically in fluid communication with a combustor, and provides the compressed air to the combustor. The combustor introduces fuel into the compressed air and ignites the mixture to generate high-pressure combustion gases. A turbine section in fluid communication with the combustor receives the combustion products and extracts work by expanding the combustion products through the turbine section. A shaft coupling the turbine and compressor section transfers the extracted work and rotates the rotor. In engines with fan disks, the shaft also uses the extracted work to rotate the fan disk and generate thrust.

Some gas turbine engines include cases with liners. The liners typically surround rotating components like compressor or fan disks and present an aerodynamically efficient surface to fluid traversing the rotating component. Such liners are commonly constructed from composite materials by laying up and fixing arcuate segments on an interior surface of the case to form a circumferential liner about the case interior.

Such conventional methods and systems have generally been considered satisfactory for their intended purpose. However, there is still a need in the art for improved methods of constructing engine cases and engine case liners. The present disclosure provides a solution for this need.

US 5163809 A discloses a spiral wqound containment ring received in an engine case, US 2014/0072421 A1 discloses a liner for a fan case comprising several concentric rings with an adhesive film between consecutive rings and between the outermost ring and the case.

### SUMMARY OF THE DISCLOSURE

A method of installing a liner in a turbomachinery case is described in claim 1. The method includes the steps of: overlaying a reinforcing layer and a release layer; spiral coiling the reinforcing layer and the release layer about an axis of the liner, wherein an inner surface of the reinforcing layer radially overlays an outer surface of the reinforcing layer; vacuum bagging and curing the reinforcing layer after spiral coiling the reinforcing layer and the release layer; winding the spiral coiled reinforcing layer about the liner axis in a diameter-reducing direction to form a wound liner having a diameter that is smaller than an inner diameter of the case; and positioning the wound liner axially within the case, whereby the liner unwinds to line the case, after the reinforcing layer is cured.

The method includes overlaying a reinforcing layer and a release layer. The method also includes spiral coiling the reinforcing layer and the release layer about the axis of the liner such that a radially inner surface of the release layer radially overlays a radially outer surface of the reinforcing layer.

The method includes vacuum bagging and curing the reinforcing layer. The method can also include winding the spiral coiled reinforcing layer about the liner axis in a diameter-reducing direction. The method can further include unwinding the spiral coiled reinforcing layer about the axis in a diameter-expanding direction.

In accordance with certain embodiments spiral coiling includes wrapping the release layer and the reinforcing layer about a circumference of a mandrel. Contiguous lengths of either or both of the reinforcing layer and release layer can be greater than the circumference of the mandrel. Once cured, the spiral coiled reinforcing layer can be axially separated into a first liner detail and a second liner detail, such as with a slicing or sawing operation.

In certain embodiments, spiral coiling the reinforcing layer and the release layer about the axis includes overlaying the release layer over the reinforcing layer. The reinforcing layer can be a first reinforcing layer and the method can include overlaying a second reinforcing layer over top the first reinforcing layer. Spiral coiling can include spiral coiling the release layer, the first reinforcing layer, and the second reinforcing layer about the liner axis. Spiral coiling can also include spiral coiling the first reinforcing layer while in contact with the second reinforcing layer about the liner axis.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below by way of example only, and with reference to certain figures, wherein:
Fig. 1 is a partially cross-sectional side view of an exemplary embodiment of a gas turbine engine constructed in accordance with the present disclosure, showing a liner location;
Fig. 2 is cross-sectional side view of a fan case of the gas turbine engine of Fig. 1, showing a case body with a liner;
Fig. 3 is a schematic axial end view of an embodiment of a liner for gas turbine engine of Fig. 1, showing a spiral-coiled shape of the liner;
Fig. 4 is a schematic axial end view of another embodiment of a liner for gas turbine engine of Fig. 1, showing a spiral-coiled liner having more than one reinforcing layer;
Fig. 5 is schematic view of a method of making a liner for a turbomachinery case, showing operations of the method; and
Fig. 6 is a schematic view of a method of making a case for gas turbine engine, showing operations of the method.

### DETAILED DESCRIPTION OF THE PREFERRED EMBODIMENTS

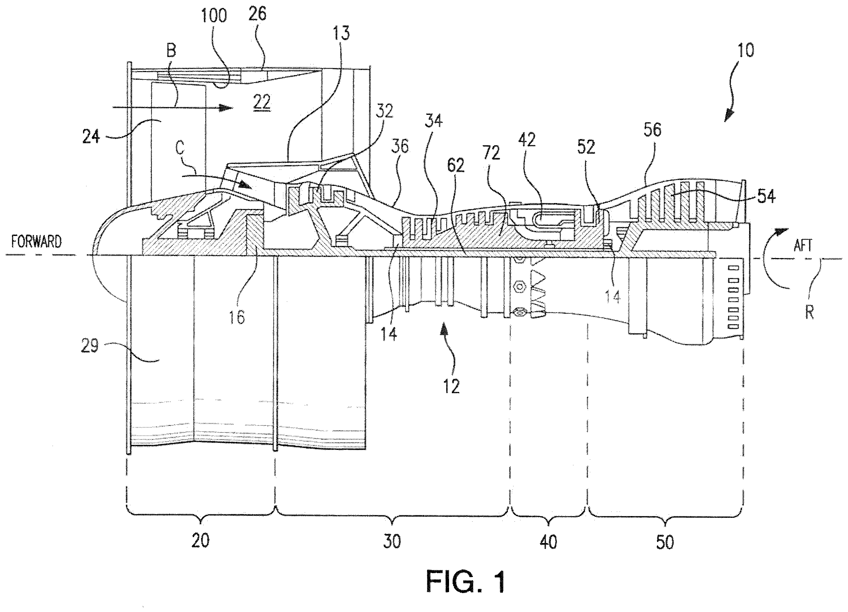

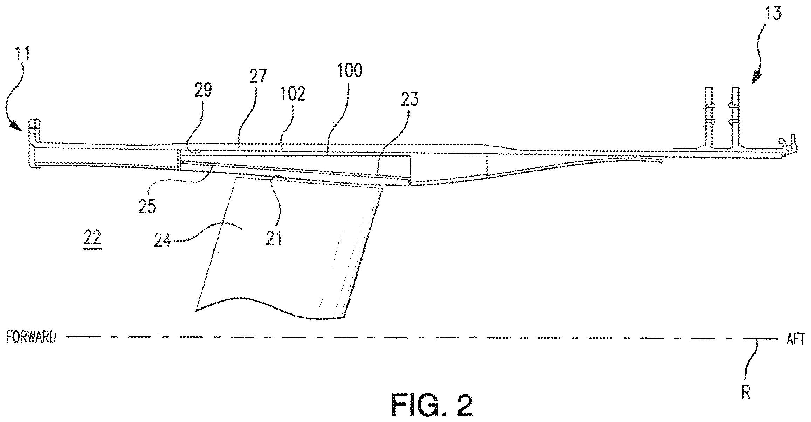

Reference will now be made to the drawings wherein like reference numerals identify similar structural features or aspects of the subject disclosure. For purposes of explanation and illustration, and not limitation, a partial view of an exemplary embodiment of a liner in accordance with the disclosure is shown in Fig. 1 and is designated generally by reference character 100. Other embodiments of liners and methods of making liners in accordance with the disclosure, or aspects thereof, are provided in Figs. 2-6, as will be described. The systems and methods described herein can be used for making lined cases for gas turbine engines, such as aircraft main engines.

With reference to Fig. 1, a gas turbine engine 10 is shown schematically. Gas turbine engine 10 as disclosed herein as a two-spool turbofan generally incorporating a fan section 20, a compressor section 30, a combustor section 40, and a turbine section 50. Fan section 20 drives air along a bypass flow path B in a bypass duct 22 defined between an engine nacelle 13 disposed radially inward from a fan shroud 28 of fan section 20. Compressor section 30 ingests a portion of the air traversing bypass duct 22, compresses the ingested air successively using a low-pressure compressor 32 and a high-pressure compressor 34, drives the compressed air along a core flow path C, and communicates the compressed air to combustor section 40. Combustor section 40 receives the compressed air, introduces fuel into the compressed air, ignites the compressed air-fuel mixture within combustors 42 of combustor section 40, and generates high-pressure combustion products. Turbine section 50 receives the high-pressure combustion products from combustor section 40 and extracts work from the combustion products by expanding the combustion products in axial succession through a high-pressure turbine 52 and a low-pressure turbine 54 of turbine section 50.

Exemplary gas turbine engine 10 generally includes a low-speed spool 60 and a high-speed spool 70 mounted for rotation about an engine rotation axis R relative to an engine static structure 12 via several bearing systems 14. Although depicted as a two-spool turbofan gas turbine engine in the disclosed non-limiting embodiment, it should be understood that the concepts described herein are not limited to use with two-spool turbofans as the teachings may be applied to other types of turbofan engines including three-spool engine architectures. It should also be understood that various bearing systems 14 at various locations may alternatively or additionally be provided, and the location of bearing systems 14 may be varied as appropriate to the application. Alternative engines might further include an augmenter section (not shown) among other systems or features.

Low-speed spool 60 generally includes an inner shaft 62 that interconnects a fan 24 of fan section 20, with a low-pressure compressor 32 and low-pressure turbine 54, i.e. low-speed spool 60. In this respect, inner shaft 62 is connected to fan 24 through a speed change mechanism, which in exemplary gas turbine engine 10 is a gear architecture 16, to drive fan 24 at a lower speed than low-speed spool 60. High-speed spool 70 generally includes an outer shaft 72 that interconnects high-pressure compressor 34 of compressor section 30 and high-pressure turbine 52 of turbine section 50. Each of fan 24, low-pressure compressor 32, and low-pressure turbine 54 are rotatable relative to respective circumferentially surrounding case structure, fan 24 being disposed within a fan case 26, low-pressure-compressor 32 and high-pressure compressor 34 being disposed within a compressor case 36, and low-pressure turbine 54 and high-pressure turbine 52 being disposed within a turbine case 56. As also illustrated in Fig. 1 and further described below, fan case 26 includes a liner 100 circumferentially surrounding fan 24.

With reference to Fig. 2, fan case 26 is shown. Fan case 26 includes a case body 27. Case body 27 circumferentially surrounds fan 24 and includes an interior surface 29. At least a portion of interior surface 29 is coaxial with blades of fan 24 and seats liner 100. Forward and aft attachments may be provided on case body 27 for securing fan case 26 to other structure (not shown for clarity purposes). An abradable layer 25 can be fixed to the liner 100 for maintaining a relatively small gap between tips 21 and fan case 26. A further honeycomb structure 23 can be fixed between liner 100 and abradable layer 25 for damping vibration and attenuating acoustics associated with rotation of fan 24. Liner 100 can provide, among other things, ballistic protection from objected slung radially outward by centrifugal force associated with rotation of fan 24.

As illustrated, liner 100 includes a reinforcing layer 102 with a cylindrical shape extending contiguously about interior surface 29 (shown in Fig. 1) of case body 27. Reinforcing layer 102 can include a rigid material such as a cured resin encapsulating a woven polyparaphenylene terephthalamide (PPT) material. Including liner 100 in fan case 26 provides ballistic protection for portions of case body 27 arranged radially outward of fan 24. Liner 100 has an axial length that is shorter than bypass duct 22. This allows for selectively distributing liner 100 within fan case 26 such that only a segment of case body 27 likely to receive objects propelled radially outward by the rotary motion of fan 24 has additional ballistic protection. Such a segment could be along segments of case body 27, axially adjacent to fan 24, and immediately aft thereof. This configuration can reduce the weight of fan case 26, as remaining portions of fan case 26 can be constructed from lighter materials with lower ballistic tolerance, such as a carbon composite material.

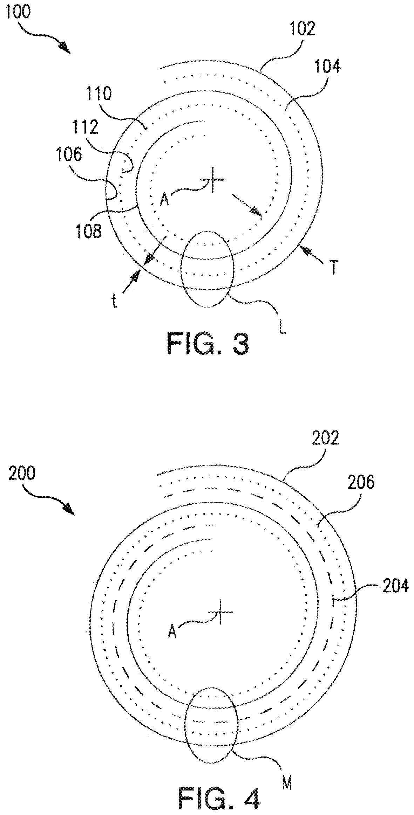

With reference to Fig. 3, liner 100 is shown in axial end view. Liner 100 includes a reinforcing layer 102 and a release layer 104. Reinforcing layer 102 overlays release layer 104 along a contiguous length of release layer 104. Release layer 104 overlays at least a portion of reinforcing layer 102 such that reinforcing layer 102 and release layer 104 have a spiral-coiled shape extending about an axis A of liner 100. As illustrated, reinforcing layer 102 and release layer 104 spiral more than twice about liner axis A. As conventional ballistic liners may have radial thicknesses that are more than twenty times as thick as reinforcing layer 102, it is contemplated that reinforcing layer 102 and release layer 104 can spiral about liner axis A twenty or more times, thereby providing a liner detail 100 with a radial thickness T that is greater than twenty times a thickness t of reinforcing layer 102.

Reinforcing layer 102 has a radially inner surface 106 and an opposed radially outer surface 108. Release layer 104 has a radially inner 112 and a radially outer surface 110. Liner 100, as a detail (e.g. a cured composite laminate), is spiral-coiled about liner axis A such that inner surface 112 of release layer 104 overlays outer surface 108 of reinforcing layer 102. Because reinforcing layer 102 is wound about axis A more than once, inner surface 106 of reinforcing layer 102 also overlays outer surface 108 of reinforcing layer 102 (e.g. at location L).

Reinforcing layer 102 can include a wound fiber mesh structure. Any suitable fiber can be used including, but not limited to, glass fibers, graphite fibers, carbon fibers, ceramic fibers, aromatic polyamide fibers, and mixtures thereof. An example of a suitable type of fiber is poly (p-phenylenetherephtalamide) fiber sold as Kevlar^{®} from the E. I. du Pont de Nemours and Company of Wilmington, Delaware. The fiber can be impregnated (or pre-impregnated as prepreg) with a thermosetting polymeric resin. Non-limiting examples of suitable thermosetting resins include vinyl ester resin, polyester resins, acrylic resins, epoxy resins, polyurethane resins, and mixtures thereof.

Release layer 104 can include a release fabric or peel ply material. Any suitable material can be used, such as a finely woven nylon fabric treated with a release agent. Suitable peel ply materials include Pyralux^{®}, also available from E. I. du Pont de Nemours and Company.

With reference to Fig. 4, a liner 200 is shown. Liner 200 is similar to liner 100 and includes a first reinforcing layer 202, a second reinforcing layer 204, and a release layer 206. First reinforcing layer 202 overlays second reinforcing layer 204 with release layer 206 disposed radially therebetween. In at least one location, e.g. location M, second reinforcing layer 204 directly overlays first reinforcing layer 202 such that a radially inner surface of second reinforcing layer 204 contacts a radially outer surface of first reinforcing layer 202. A radially outer surface of release layer 206 underlays first reinforcing layer 202. An opposed radially inner surface of release layer 206 overlays second reinforcing layer 204. It is to be understood that more than two layers of reinforcing material can be directly overlaid on one another between the release layer, as suitable for any intended application of liner 200.

Overlaying two or more reinforcing layers over a single release layer thickens each spiral of the resulting liner preform. This can reduce the number of times that the reinforcing layers and release layer need be wound about the liner axis to achieve a desired liner detail thickness. For example, a pair of directly overlapped reinforcing layers wound only need to be wound about the liner axis ten times for the resulting liner preform to have a thickness twenty times the thickness of an individual reinforcing layer. As will be appreciated, thickening individual spirals of the liner preform can change the amount of force required to reduce the diameter of the liner preform prior to insertion in the case. As will also be appreciated, it can also change the amount of force the liner detail applies to the interior of the case once inserted into the case.

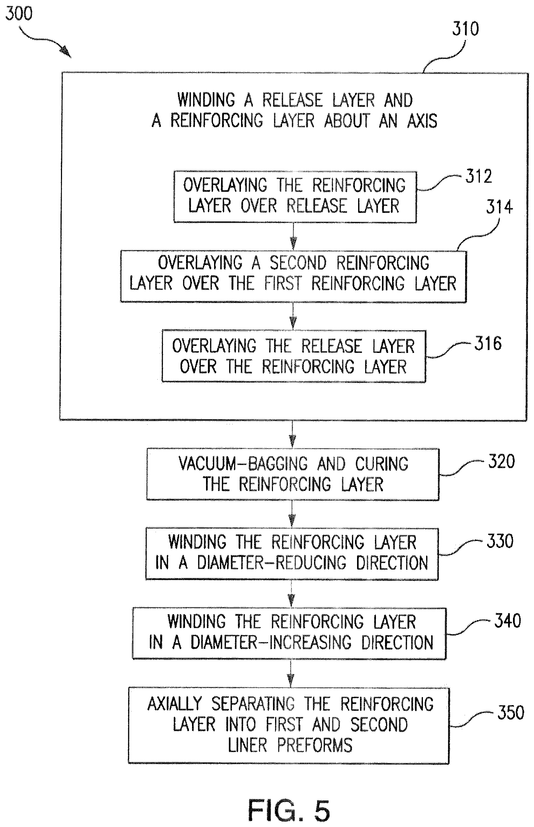

With reference to Fig. 5, a method 300 of making a liner for a turbomachinery case is shown. Method 300 includes winding a release layer and a reinforcing layer, e.g. reinforcing layer 102 and release layer 104, about an axis as indicated by box 310. The winding operation can include overlaying the reinforcing layer over the release layer, as indicated by box 312. This positions the release layer radially between the reinforcing layer and underlying winding tool, such as a mandrel for example, facilitating removal of the liner from the winding tool once the shape of the winding tool has been transferred into the reinforcing layer. In embodiments, the winding tool has a diameter that is greater than an interior surface of a case receiving the liner.

The winding operation can further include overlaying the release layer over the reinforcing layer, as indicated by box 316. This facilitates changing the diameter of the winding in a cured state by allowing radially adjacent portions of the winding layer to slide circumferentially across the release layer and in relation to one another. In embodiments of method 300 the reinforcing layer is a first reinforcing layer, and winding further includes overlaying a second reinforcing layer over the first reinforcing layer as indicated by box 314. It is contemplated that the second reinforcing layer can directly overlay the first reinforcing layer such that the first and second reinforcing layers contact one another. This allows the first and second reinforcing layers to form a relatively thick spiral liner detail radially separated by the release layer. For a given thickness of liner, embodiments having more than one reinforcing layer require less winding about the axis to obtain a desired liner detail thickness.

Method 300 also includes vacuum bagging and curing the reinforcing layer, as indicated by a box 320. As wrapped about the mandrel, the reinforcing layer is relatively flexible. Vacuum bagging and curing the reinforcing layer increases the rigidity of the reinforcing layer and enables the reinforcing layer to resist changes to its shape, thereby forming a liner detail. The release layer remains between radially adjacent coils of the spiral-coiled reinforcing layer during the vacuum bagging and curing. This enables overlapping coils of the spiral-coiled detail to slide in relation to one another over the release layer upon application of suitable winding force, enabling changing the diameter of the coil-spiraled detail by winding and unwinding the coil-spiraled detail. It is also contemplated that the release layer can be removed subsequent to vacuum bagging and curing such that, as installed in a case, the liner includes only reinforcing layers in the liner structure.

For example, method 300 can include winding the reinforcing layer in a diameter-reducing direction, as indicated by box 330. Winding the reinforcing layer in the diameter-reducing direction can be accomplished by circumferentially displacing a first end of the reinforcing layer in relation to an opposite second end of the reinforcing layer. It is contemplated that the diameter-reducing direction can be in either a clockwise or a counter-clockwise direction about the axis of the liner detail, e.g. liner axis A.

Method 300 can also include winding the reinforcing layer in a diameter-increasing direction, as indicated by box 340. Winding the reinforcing layer in the diameter-expanding direction can be accomplished by circumferentially displacing a first end of the reinforcing layer in relation to an opposite second end of the reinforcing layer. It is contemplated that the diameter-reducing direction can be either in a clockwise or a counter-clockwise direction about the axis of the liner detail, and that the diameter-expanding direction is in a direction opposite the diameter-reducing direction. In embodiments, the release layer can be removed from the liner preform prior to winding the liner detail about the liner axis. This can potentially reduce the weight of the case when the liner detail is incorporated into the case.

Method 300 can additionally include axially separating the reinforcing layer into a first liner detail and a second liner detail, as indicated by box 350. The separating can include sawing the cured reinforcing layer in a plane oblique or substantially orthogonal with respect to the axis of the cured reinforcing layer. The separating can also include sawing the release layer into first and second release disposed between adjacent turns of the reinforcing layer.

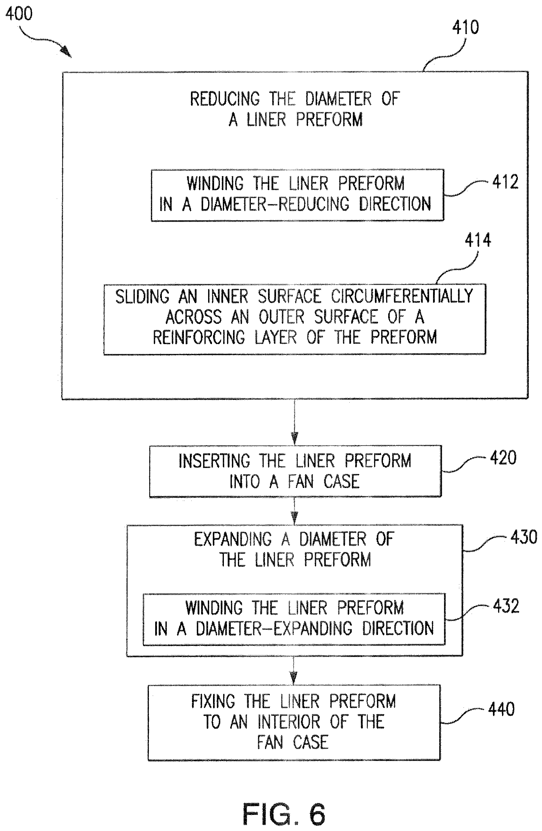

With reference to Fig. 6, a method 400 of making a fan case is shown. Method 400 includes reducing a diameter of a liner detail, e.g. liner 200, as indicated by box 410. Reducing the liner detail diameter can include winding the liner detail about the axis in a diameter-reducing direction, as indicated by box 412. Reducing the liner detail diameter can also include sliding an inner surface of a liner detail reinforcing layer across an outer surface of the liner detail reinforcing layer, as indicated by box 414. Method 400 also includes inserting the liner detail into a gas turbine engine case, as indicated by box 420, and expanding the diameter of the liner detail, as indicated by box 430. Expanding the liner detail diameter can include winding (or un-winding) the liner detail in a diameter-expanding direction, as indicated by box 432, within an interior of the case. The liner detail can thereafter be fixed to the case interior surface in a fixing operation, as indicated by box 440, for installing the liner within the case. The liner can then be unwound within the case. In embodiments, the liner may be replaced with an adhesive layer to provide additional strength to the liner once installed within the case interior.

The methods of the present disclosure, as described above and shown in the drawings, provide for fan case ballistic liners and fan cases with superior properties including ease of manufacture. While the methods of the subject disclosure have been shown and described with reference to preferred embodiments, those skilled in the art will readily appreciate that changes and/or modifications may be made thereto without departing from the scope of the subject disclosure as defined by the claims.

## Claims

1. A method of installing a liner (100; 200) in a turbomachinery case (26), wherein the liner is formed from composite materials, the method comprising:
overlaying (312, 314, 316) a reinforcing layer (102; 202, 204) and a release layer (104; 206), wherein the reinforcing layer is uncured;
spiral coiling (310) the reinforcing layer and the release layer about an axis (A) of the liner, wherein an inner surface (106) of the reinforcing layer radially overlays an outer surface (108) of the reinforcing layer;
vacuum bagging and curing the reinforcing layer (320) after spiral coiling the reinforcing layer and the release layer;
winding the spiral coiled reinforcing layer about the liner axis in a diameter-reducing direction (330; 412) to form a wound liner having a diameter that is smaller than an inner diameter of the case; and
positioning (420) the wound liner axially within the case, whereby the liner unwinds (430; 432) to line the case, after the reinforcing layer is cured.

2. A method as recited in claim 1, wherein spiral coiling the reinforcing layer and the release layer about the axis further includes overlaying (316) the release layer over the reinforcing layer.

3. A method as recited in claim 1 or 2, wherein winding the spiral coiled reinforcing layer about the liner axis in the diameter-reducing direction includes reducing a diameter of the spiral-coiled reinforcing layer (410).

4. A method as recited in any of claims 1, 2 or 3, further including unwinding the spiral coiled reinforcing layer about the about the axis in a diameter-expanding direction (430; 432).

5. A method as recited in any preceding claim, wherein the reinforcing layer is a first reinforcing layer (202), and further including overlaying a second reinforcing layer (204) over the first reinforcing layer;
preferably wherein spiral coiling includes spiral coiling the release layer, the first reinforcing layer, and the second reinforcing layer about the axis (312, 314, 316); and
further preferably wherein spiral coiling includes spiral coiling the first reinforcing layer while in contact with the second reinforcing layer about the axis.

6. A method as recited in any preceding claim, wherein the spiral coiling includes wrapping the release layer and the reinforcing layer about a circumference of mandrel, wherein contiguous lengths of release layer and reinforcing layer are both greater than the circumference of the mandrel.

7. A method as recited in any preceding claim, further including axially separating (350) the reinforcing layer into a first liner detail and a second liner detail.

8. A method as recited in claim 1, wherein winding the spiral coiled reinforcing layer about the liner axis in the diameter-reducing direction includes reducing a diameter of the spiral-coiled reinforcing layer (410); the method further comprising:
inserting (420) the liner into an interior of the case; and
fixing (440) the liner to an interior surface of the case.

9. A method as recited in claim 8, wherein winding the liner includes sliding the reinforcing layer inner surface circumferentially across the reinforcing layer outer surface (414);
preferably wherein the release layer radially separates the reinforcing layer inner surface from the reinforcing layer outer surface.

10. A method as recited in claims 8 or 9, further including expanding the liner diameter (430) by unwinding the liner in a diameter-expanding direction (432) about the liner detail axis.

## Patentansprüche

1. Verfahren zum Installieren einer Verkleidung (100; 200) in ein Turbomaschinengehäuse (26), wobei die Verkleidung aus Verbundwerkstoffen gebildet ist, wobei das Verfahren Folgendes umfasst:
Überlagern (312, 314, 316) einer Verstärkungsschicht (102; 202, 204) und einer Trennschicht (104; 206), wobei die Verstärkungsschicht ungehärtet ist;
Spiralwickeln (310) der Verstärkungsschicht und der Trennschicht um eine Achse (A) der Verkleidung, wobei eine Innenfläche (106) der Verstärkungsschicht eine Außenfläche (108) der Verstärkungsschicht radial überlagert;
Vakuumverpacken und Aushärten der Verstärkungsschicht (320) nach dem Spiralwickeln der Verstärkungsschicht und der Trennschicht;
Wickeln der spiralgewickelten Verstärkungsschicht um die Verkleidungsachse in einer den Durchmesser reduzierenden Richtung (330; 412), um eine gewickelte Verkleidung zu bilden, die einen Durchmesser aufweist, der kleiner als ein Innendurchmesser des Gehäuses ist; und
axiales Positionieren (420) der gewickelten Verkleidung in dem Gehäuse, wobei sich die Verkleidung abwickelt (430; 432), um das Gehäuse zu verkleiden, nachdem die Verstärkungsschicht ausgehärtet ist.

2. Verfahren nach Anspruch 1, wobei Spiralwickeln der Verstärkungsschicht und der Trennschicht um die Achse ferner Überlagern (316) der Trennschicht über der Verstärkungsschicht beinhaltet.

3. Verfahren nach Anspruch 1 oder 2, wobei Wickeln der spiralgewickelten Verstärkungsschicht um die Verkleidungsachse in der den Durchmesser reduzierenden Richtung Reduzieren eines Durchmessers der spiralgewickelten Verstärkungsschicht (410) beinhaltet.

4. Verfahren nach einem der Ansprüche 1, 2 oder 3, ferner umfassend Abwickeln der spiralgewickelten Verstärkungsschicht um die Achse in einer den Durchmesser erweiternden Richtung (430; 432) .

5. Verfahren nach einem der vorhergehenden Ansprüche, wobei die Verstärkungsschicht eine erste Verstärkungsschicht (202) ist und ferner beinhaltend Überlagern einer zweiten Verstärkungsschicht (204) über der ersten Verstärkungsschicht;
wobei vorzugsweise Spiralwickeln Spiralwickeln der Trennschicht, der ersten Verstärkungsschicht und der zweiten Verstärkungsschicht um die Achse (312, 314, 316) beinhaltet; und
wobei weiter bevorzugt Spiralwickeln Spiralwickeln der ersten Verstärkungsschicht während in Kontakt mit der zweiten Verstärkungsschicht um die Achse beinhaltet.

6. Verfahren nach einem der vorhergehenden Ansprüche, wobei Spiralwickeln Umhüllen der Trennschicht und der Verstärkungsschicht um einen Dornumfang beinhaltet, wobei aneinandergrenzende Längen der Trennschicht und der Verstärkungsschicht jeweils größer sind als der Umfang des Dorns.

7. Verfahren nach einem der vorhergehenden Ansprüche, ferner beinhaltend axiales Trennen (350) der Verstärkungsschicht in eine erste Verkleidungseinzelheit und eine zweite Verkleidungseinzelheit.

8. Verfahren nach Anspruch 1, wobei Wickeln der spiralgewickelten Verstärkungsschicht um die Verkleidungsachse in der den Durchmesser reduzierenden Richtung Reduzieren eines Durchmessers der spiralgewickelten Verstärkungsschicht (410) beinhaltet; wobei das Verfahren ferner Folgendes umfasst:
Einsetzen (420) der Verkleidung in einen Innenraum des Gehäuses; und
Befestigen (440) der Verkleidung an einer inneren Fläche des Gehäuses.

9. Verfahren nach Anspruch 8, wobei Wickeln der Verkleidung Schieben der Innenfläche der Verstärkungsschicht in Umfangsrichtung über die Außenfläche der Verstärkungsschicht (414) beinhaltet;
wobei vorzugsweise die Trennschicht die Innenfläche der Verstärkungsschicht von der Außenfläche der Verstärkungsschicht radial trennt.

10. Verfahren nach Anspruch 8 oder 9, ferner beinhaltend Erweitern des Verkleidungsdurchmessers (430) durch Abwickeln der Verkleidung in einer den Durchmesser erweiternden Richtung (432) um die Verkleidungseinzelheitsachse.

## Revendications

1. Procédé d'installation d'une doublure (100 ; 200) dans un carter de turbomachine (26), dans lequel la doublure est formée de matériaux composites, le procédé comprenant :
la superposition (312, 314, 316) d'une couche de renfort (102 ; 202, 204) et d'une couche de séparation (104 ; 206), la couche de renfort étant non durcie ;
le bobinage en spirale (310) de la couche de renfort et de la couche de séparation autour d'un axe (A) de la doublure, dans lequel une surface interne (106) de la couche de renfort se superpose radialement à une surface externe (108) de la couche de renfort ;
l'ensachage sous vide et le durcissement de la couche de renfort (320) après bobinage en spirale de la couche de renfort et de la couche de séparation ;
l'enroulement de la couche de renfort bobinée en spirale autour de l'axe de la doublure dans une direction de réduction de diamètre (330 ; 412) pour former une doublure enroulée ayant un diamètre qui est inférieur à un diamètre interne du carter ; et
le positionnement (420) de la doublure enroulée axialement à l'intérieur du carter, moyennant quoi la doublure se déroule (430 ; 432) pour revêtir le carter, une fois que la couche de renfort est durcie.

2. Procédé selon la revendication 1, dans lequel le bobinage en spirale de la couche de renfort et de la couche de séparation autour de l'axe comporte en outre la superposition (316) de la couche de séparation sur la couche de renfort.

3. Procédé selon la revendication 1 ou 2, dans lequel l'enroulement de la couche de renfort bobinée en spirale autour de l'axe de la doublure dans la direction de réduction de diamètre comporte la réduction d'un diamètre de la couche de renfort bobinée en spirale (410).

4. Procédé selon l'une quelconque des revendications 1, 2 ou 3, comportant en outre le déroulement de la couche de renfort bobinée en spirale autour de l'axe dans une direction d'expansion de diamètre (430 ; 432).

5. Procédé selon une quelconque revendication précédente, dans lequel la couche de renfort est une première couche de renfort (202), et comportant en outre la superposition d'une seconde couche de renfort (204) sur la première couche de renfort,
de préférence dans lequel le bobinage en spirale comporte le bobinage en spirale de la couche de séparation, de la première couche de renfort et de la seconde couche de renfort autour de l'axe (312, 314, 316) ; et
de préférence en outre dans lequel le bobinage en spirale comporte le bobinage en spirale de la première couche de renfort alors qu'elle est en contact avec la seconde couche de renfort autour de l'axe.

6. Procédé selon une quelconque revendication précédente, dans lequel le bobinage en spirale comporte l'enroulement de la couche de séparation et de la couche de renfort autour d'une circonférence de mandrin, dans lequel les longueurs contiguës de la couche de séparation et de la couche de renfort sont toutes deux plus grandes que la circonférence du mandrin.

7. Procédé selon une quelconque revendication précédente, comportant en outre la séparation axiale (350) de la couche de renfort en un premier détail de doublure et un second détail de doublure.

8. Procédé selon la revendication 1, dans lequel l'enroulement de la couche de renfort bobinée en spirale autour de l'axe de la doublure dans la direction de réduction de diamètre comporte la réduction d'un diamètre de la couche de renfort bobinée en spirale (410) ; le procédé comprenant en outre :
l'insertion (420) de la doublure dans une zone intérieure du carter ; et
la fixation (440) de la doublure à une surface intérieure du carter.

9. Procédé selon la revendication 8, dans lequel l'enroulement de la doublure comporte le glissement de la surface interne de la couche de renfort circonférentiellement à travers la surface externe de la couche de renfort (414) ;
de préférence dans lequel la couche de séparation sépare radialement la surface interne de la couche de renfort de la surface externe de la couche de renfort.

10. Procédé selon la revendication 8 ou 9, comportant en outre l'expansion du diamètre de doublure (430) par déroulement de la doublure dans une direction d'expansion de diamètre (432) autour de l'axe de détail de doublure.
